# FASCICULE DE BREVET EUROPEEN

(11) **EP 2 635 782 B1**
(45) Date de publication et mention de la délivrance du brevet: **05.07.2017**
(21) Numéro de dépôt: 11824269.2
(22) Date de dépôt: 28.10.2011
(51) Int. Cl.: F02C 7/268, F02C 9/44, F02C 6/20

(54) **PROCEDE D'OPTIMISATION DE LA CONSOMMATION SPECIFIQUE D'UN HELICOPTERE BIMOTEUR ET ARCHITECTURE BIMOTEUR POUR SA MISE EN OEUVRE**
VERFAHREN ZUR OPTIMIERUNG DES SPEZIFISCHEN KRAFTSTOFFVERBRAUCHS EINES DOPPELMOTORHUBSCHRAUBERS UND AUFBAU EINES DOPPELMOTORS ZUR DURCHFÜHRUNG DES VERFAHRENS
METHOD OF OPTIMIZING THE SPECIFIC FUEL CONSUMPTION OF A TWIN ENGINE HELICOPTER AND TWIN ENGINE ARCHITECTURE FOR IMPLEMENTING IT

(30) Priorité: 03.03.2011 FR 1151717; 04.11.2010 FR 1059065
(43) Date de publication de la demande: 11.09.2013
(73) Titulaire: Safran Helicopter Engines, 64510 Bordes (FR)
(72) Inventeur: MARCONI, Patrick, F-64110 Gelos (FR); THIRIET, Romain, F-64110 Jurancon (FR)
(74) Mandataire: Gevers & Orès
(86) Numéro de dépôt international: PCT/FR2011/052532
(87) Numéro de publication internationale: WO 2012/059671

(56) Documents cités:
- EP-A2- 1 990 519
- DE-A1-102007 059 950
- FR-A- 1 272 496
- GB-A- 2 460 246
- JP-A- 5 193 579
- US-A- 3 093 968
- US-A- 3 367 107
- US-A- 5 239 830
- US-B1- 6 880 784

## Description

### DOMAINE TECHNIQUE

L'invention concerne un procédé d'optimisation de la consommation spécifique, en abrégé Cs, d'un hélicoptère équipé de deux turbomoteurs, ainsi qu'une architecture bimoteur, équipée d'un système de régulation pour la mise en oeuvre de ce procédé.

De manière générale, en régime de croisière, les turbomoteurs fonctionnent à des niveaux de puissance faibles, en dessous de leur puissance maximale continue, en abrégé PMC (initiales de « Puissance Maximale Continue »). Cette puissance en croisière est égale à environ 50% de leur puissance maximale de décollage, en abrégé PMD (initiales de « Puissance Maximale de Décollage »). Ces faibles niveaux de puissance entraînent une consommation spécifique de l'ordre de 30% supérieure à la Cs à la PMD, et donc une surconsommation en carburant en régime de croisière.

Un hélicoptère est équipé de deux turbomoteurs, chacun conçu de manière surdimensionnée pour pouvoir maintenir l'hélicoptère en vol en cas de panne de l'autre moteur. Dans ces régimes de fonctionnement dédiés à la gestion d'un moteur inopérant, appelés régimes OEI (initiales de « One Engine Inoperative » en terminologie anglaise), le moteur valide fournit une puissance bien au-delà de sa puissance nominale pour permettre à l'hélicoptère de faire face à une situation périlleuse puis de poursuivre son vol. Or chaque régime est défini par un niveau de puissance et une durée maximale d'utilisation. Le débit de carburant injecté dans la chambre de combustion du turbomoteur valide est alors sensiblement augmenté en régime OEI pour fournir ce surcroît de puissance.

### ETAT DE LA TECHNIQUE

Ces turbomoteurs surdimensionnés sont pénalisant en masse et en consommation de carburant. Afin de réduire cette consommation en régime de croisière, il est possible d'arrêter l'un des turbomoteurs. Le moteur actif fonctionne alors à un niveau de puissance plus élevé et donc à un niveau de Cs plus favorable. Cependant, cette pratique est contraire aux règles de certification actuelles et les turbomoteurs ne sont pas conçus pour garantir un taux de fiabilité de redémarrage compatible avec les normes de sûreté.

Un hélicoptère multimoteurs selon l'art antérieur est divulgué dans le document US3093968.

Ainsi, la durée de redémarrage du turbomoteur en veille est typiquement de l'ordre de 30 secondes. Cette durée peut s'avérer insuffisante selon les conditions de vol, par exemple à faible hauteur de vol avec une défaillance partielle du moteur initialement actif. Si le moteur en veille ne redémarre pas à temps, l'atterrissage avec le moteur en difficulté peut s'avérer critique.

Plus généralement, l'utilisation d'un seul turbomoteur comporte des risques dans toutes les circonstances de vol où il est nécessaire de disposer d'un surcroît de puissance qui impose, en termes de sécurité, de pouvoir disposer des deux turbomoteurs.

### EXPOSE DE L'INVENTION

L'invention vise à réduire la Cs pour tendre vers la Cs à la puissance PMD, en préservant les conditions de sécurité minimale de puissance à fournir pour tout type de mission, par exemple pour une mission comportant une phase de recherche à basse altitude.

Pour ce faire, l'invention prévoit de disposer d'une bi-motorisation en liaison avec des moyens particuliers aptes à garantir des redémarrages fiables.

Plus précisément, la présente invention a pour objet un procédé d'optimisation de la consommation spécifique d'un hélicoptère équipé de deux turbomoteurs comportant chacun un générateur de gaz muni d'une chambre de combustion. Au moins l'un des turbomoteurs est apte à fonctionner seul en régime de vol stabilisé dit continu, l'autre moteur étant alors en régime dit de sur-ralenti à puissance nulle apte à passer en mode d'accélération du générateur de gaz de ce moteur par un entraînement compatible avec un redémarrage d'urgence. Ce redémarrage d'urgence est réalisé, en cas d'échec d'au moins une tentative préalable de redémarrage conventionnel, par une assistance mécanique d'urgence au générateur de gaz, produite par une énergie autonome embarquée et dédiée à ce redémarrage. En cas de panne d'un turbomoteur utilisé en fonctionnement seul, l'autre turbomoteur en sur-ralenti est redémarré par l'assistance d'urgence.

Le régime de rotation du générateur de gaz du turbomoteur au super ralenti reste sensiblement inférieur au régime de rotation du générateur de gaz au ralenti usuellement appliqué aux turbomoteurs.

Un régime continu se définit par une non-limitation de durée et ne concerne donc pas les phases transitoires de décollage, de vol stationnaire et d'atterrissage. Par exemple pour une mission de recherche de naufragés, un régime continu se rapporte à la phase de vol de croisière vers la zone de recherche et à la phase de vol à basse altitude dans la zone de recherche au-dessus de l'eau et à la phase de vol en croisière de retour vers la base.

Cependant une utilisation sélective des turbomoteurs selon l'invention, en fonction des phases et des conditions de vol, autres que les phase transitoires, permet d'obtenir des performances optimisées en termes de consommation Cs avec des puissances proches de la PMD mais inférieures ou égales à la PMC, tout en faisant face aux cas de panne et d'urgence par des moyens de redémarrage sûrs du turbomoteur en sur-ralenti.

Une sortie de régime de sur-ralenti vers un régime actif de type « bimoteur » est déclenchée de manière dite « normale » lorsqu'un changement de régime de vol impose le passage d'un à deux moteurs, par exemple lorsque l'hélicoptère passe d'un régime de croisière à un vol stationnaire, ou de manière dite « d'urgence » en cas de panne de moteur ou de conditions de vol difficiles.

Selon des modes de mise en oeuvre particuliers :
- le régime de sur-ralenti est choisi parmi un régime de maintien en rotation du moteur avec la chambre de combustion allumée, un régime de maintien en rotation du moteur avec la chambre de combustion éteinte et un régime de rotation nulle du moteur avec la chambre de combustion éteinte ;
- en sortie « normale » de régime de sur-ralenti, la chambre étant allumée, une variation du débit de carburant selon une loi de protection contre le pompage et l'emballage thermique entraîne le générateur de gaz du turbomoteur en accélération jusqu'au niveau de puissance bimoteur ou,
- la chambre étant éteinte, un entraînement actif entraîne le générateur de gaz en rotation selon une vitesse pré-positionnée dans une fenêtre d'allumage, en particulier selon une fenêtre de vitesses de l'ordre du dixième de la vitesse nominale puis, une fois la chambre allumée, le générateur de gaz est accéléré comme précédemment ou,
- la chambre étant éteinte, le générateur de gaz est entraîné par un équipement électrique propre à ce générateur, cet équipement le démarre et l'accélère jusqu'à ce que sa vitesse de rotation soit dans une fenêtre d'allumage de la chambre puis, une fois la chambre allumée, le générateur de gaz est de nouveau accéléré comme précédemment ;
- en régime de sur-ralenti en chambre éteinte, une mise à feu complémentaire de la chambre de combustion, c'est-à-dire en plus d'une mise à feu conventionnelle, peut être déclenchée ;
- en sortie d'urgence d'un régime de sur-ralenti en chambre éteinte, le générateur de gaz étant à sa vitesse de rotation dans la fenêtre d'allumage de la chambre de combustion, la chambre est allumée puis le générateur de gaz est accéléré par le dispositif d'assistance d'urgence ;
- les turbomoteurs fournissant des puissances maximales inégales, le turbomoteur de plus faible puissance fonctionne seul lorsque la puissance totale demandée est inférieure à sa PMC, en particulier pendant un régime de vol à basse altitude de type phase de recherche ;
- les puissances des turbomoteurs présentent un rapport d'hétérogénéité de puissance au moins égal au rapport entre la puissance du régime OEI le plus élevé du turbomoteur de plus faible puissance et la puissance PMD du turbomoteur le plus puissant ;
- le rapport d'hétérogénéité est compris entre 1,2 et 1,5 pour couvrir un ensemble de missions type ; de préférence, ce rapport est au moins égal au rapport entre la puissance du régime OEI le plus élevé du turbomoteur de plus faible puissance et la puissance PMD du turbomoteur le plus puissant ;
- une mise à feu à effet quasi-instantané, complémentaire d'un allumage conventionnel à bougies, peut être déclenchée pour allumer la chambre de combustion en sortie d'urgence ;
- l'énergie d'assistance mécanique, en sortie d'urgence d'un régime de sur-ralenti, est choisie entre une énergie de nature hydraulique, pyrotechnique, anaérobie, électrique, mécanique et pneumatique ;
- l'assistance d'urgence est désaccouplée après le redémarrage du moteur valide ;
- l'assistance d'urgence est de préférence à usage exceptionnel, son activation pouvant être suivie d'une action de maintenance en vue de son remplacement.

Selon des modes de mise en oeuvre avantageux :
- Deux turbomoteurs définissant des puissances PMD au décollage, fournissent des puissances sensiblement différentes présentant un rapport d'hétérogénéité de puissances au moins égal au rapport entre la puissance du régime OEI le plus élevé du turbomoteur de plus faible puissance et la puissance PMD du turbomoteur le plus puissant ; l'un des turbomoteurs étant apte à fonctionner seul en régime continu, l'autre moteur est alors en veille à puissance nulle et chambre de combustion éteinte, tout en restant maintenu en rotation par l'entraînement en vue d'un redémarrage d'urgence ;
- les deux turbomoteurs fonctionnent ensemble pendant les phases transitoires de décollage, de vol stationnaire et d'atterrissage ;
- le turbomoteur de plus faible puissance fonctionne seul lorsque la puissance totale demandée est inférieure ou égale à sa PMC.

L'invention se rapporte également à une architecture bimoteur équipée d'un système de régulation pour la mise en oeuvre de ce procédé. Une telle architecture comporte deux turbomoteurs équipés chacun d'un générateur de gaz et d'une turbine libre transmettant la puissance disponible jusqu'aux puissances maximales disponibles. Chaque générateur de gaz est équipé de moyens aptes à activer le générateur de gaz en sortie de régime sur-ralenti, comportant des moyens d'entraînement en rotation et des moyens d'accélération du générateur de gaz, des moyens de mise à feu à effet quasi-instantané, complémentaires des moyens conventionnels d'allumage à bougies, et d'un dispositif d'assistance mécanique d'urgence comportant une source d'énergie autonome embarquée. Le système de régulation contrôle les moyens d'entraînement et les dispositifs d'assistance d'urgence des générateurs de gaz en fonction des conditions et des phases de vol de l'hélicoptère selon un profil de mission préalablement enregistré dans une mémoire de ce système.

Avantageusement, l'invention peut supprimer l'existence de régimes OEI sur le turbomoteur de plus forte puissance.

Selon des modes préférés de réalisation :
- les moyens d'entraînement actifs d'un générateur de gaz peuvent être choisis parmi un démarreur électrique équipant ce générateur de gaz, alimenté par un réseau de bord ou un démarreur/générateur équipant l'autre générateur de gaz, un générateur électrique entraîné par une boîte de transfert de puissance, connue sous l'abréviation BTP, ou directement par la turbine libre de l'autre turbomoteur, et un dispositif d'entraînement mécanique couplé à cette BTP ou à cette turbine libre ;
- les moyens d'allumage complémentaires peuvent être choisis parmi un dispositif à bougies à incandescence (bougies « glow plug » en terminologie anglaise), à rayonnement laser et un dispositif pyrotechnique ;
- la source autonome embarquée est choisie parmi des sources d'alimentation hydraulique, pyrotechnique, pneumatique, à combustion anaérobie, électrique, (en particulier par une batterie dédiée ou des super-condensateurs), et mécanique, notamment par une chaîne de puissance mécanique liée au rotor.

### BREVE DESCRIPTION DES FIGURES

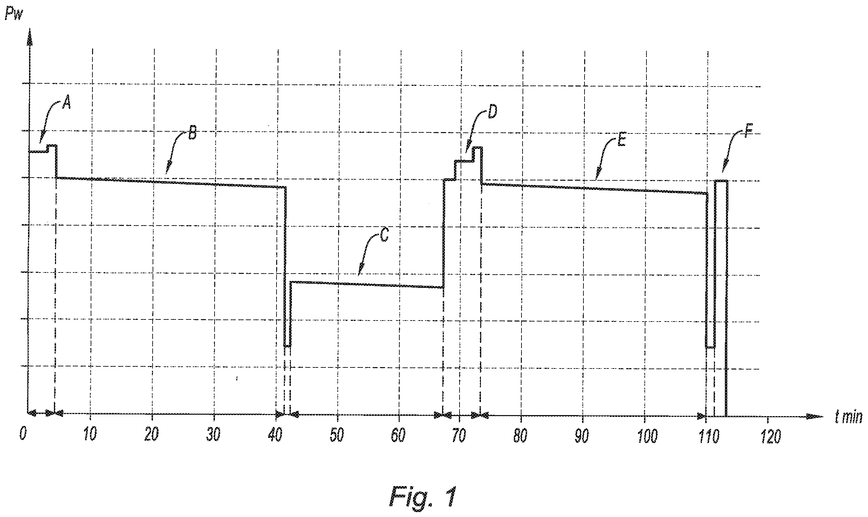

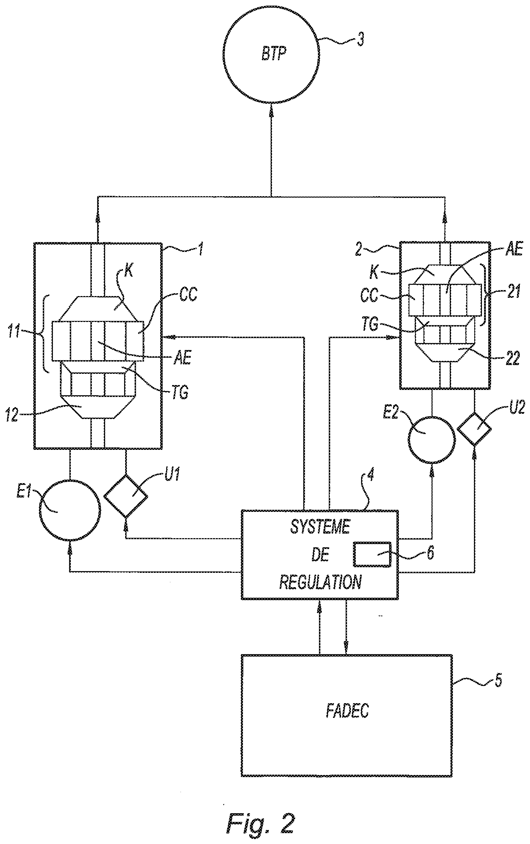

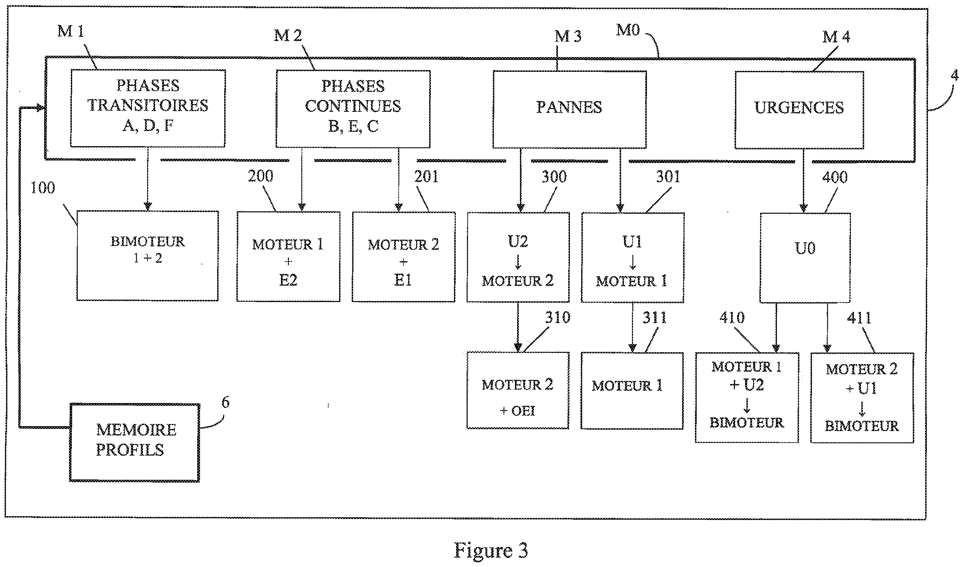

D'autres aspects, caractéristiques et avantages de l'invention apparaîtront dans la description qui suit, relative à des modes de réalisation particuliers, en référence aux dessins annexés qui représentent, respectivement :
- en figure 1, un diagramme représentant un exemple de profil de puissance demandée au cours d'une mission comportant une phase de recherche et deux phases de croisière;
- en figure 2, un schéma simplifié d'un exemple d'architecture bimoteur selon l'invention, et
- en figure 3, un diagramme de commandes d'un système de régulation selon l'invention en fonction des conditions de vol lors d'une mission de profil illustré par la figure 1.

### DESCRIPTION DETAILLEE

Les termes « moteur » et « turbomoteur » sont synonymes dans le présent texte. Dans le mode de réalisation illustré, les moteurs ont des puissances maximales différenciées. Ce mode permet avantageusement de supprimer les régimes OEI sur le turbomoteur de plus forte puissance, ce qui minimise la différence de masses entre les deux moteurs. Pour simplifier le langage, le moteur le plus puissant ou moteur surdimensionné peut également être désigné par le « gros » moteur et le moteur de plus faible puissance par le « petit » moteur.

Le diagramme illustré en figure 1 représente la variation de puissance totale requise Pw en fonction du temps « t » pour mener à bien une mission de récupération de naufragés à l'aide d'un hélicoptère bimoteurs. Cette mission comporte six phases principales :
- une phase de décollage « A » qui utilise la puissance maximale PMD ;
- une phase de vol de croisière « B » jusqu'à la zone de recherche effectuée à un niveau de puissance inférieur ou égal à la PMC ;
- une phase de recherche « C » dans la zone de recherche à basse altitude au-dessus de l'eau qui peut s'effectuer à puissance et donc à vitesse de vol minimisant la consommation horaire afin de maximiser le temps d'exploration ;
- une phase de récupération des naufragés « D » en vol stationnaire qui nécessite une puissance de l'ordre de celle déployée au décollage ;
- une phase de retour à la base « E », comparable au vol de croisière aller « B » en termes de durée, de puissance et de consommation ; et
- une phase d'atterrissage « F », nécessitant une puissance légèrement supérieure à la puissance en phase de croisière « B » ou « E ».

Une telle mission recouvre l'ensemble des phases qui peuvent se dérouler classiquement pendant un vol d'hélicoptère. La figure 2 illustre schématiquement un exemple d'architecture bimoteur d'hélicoptère qui permet d'optimiser la consommation Cs.

Chaque turbomoteur 1, 2 comporte classiquement un générateur de gaz 11, 21 et une turbine libre 12, 22 alimentée par le générateur de gaz pour fournir de la puissance. Au décollage et en régime continu, la puissance fournie peut atteindre des valeurs maximales prédéterminées, respectivement PMD et PMC. Un générateur de gaz se compose classiquement de compresseurs d'air « K » en liaison avec une chambre de combustion « CC » du carburant dans l'air comprimé qui délivrent des gaz fournissant de l'énergie cinétique, et de turbines de détente partielle de ces gaz « TG » qui entraînent en rotation les compresseurs via des arbres d'entraînement « AE ». Les gaz entraînent également les turbines libres de transmission de puissance. Dans l'exemple, les turbines libres 12, 22 transmettent la puissance via une BTP 3 qui centralise la fourniture de puissance aux charges et accessoires (prise de mouvement du rotor, pompes, alternateurs, dispositif démarreur/générateur, etc.).

Les puissances maximales PMD et PMC du turbomoteur 1 sont sensiblement supérieures à celles que le turbomoteur 2 est capable de fournir : le turbomoteur 1 est surdimensionné en puissance par rapport au turbomoteur 2. Le rapport d'hétérogénéité entre les deux turbomoteurs, qui correspond au rapport entre la puissance du régime OEI le plus élevé du turbomoteur 2 et la puissance maximale PMD du turbomoteur 1, est égal à 1,3 dans l'exemple. La puissance d'un turbomoteur fait ici référence à la puissance intrinsèque que peut fournir au maximum ce turbomoteur à un régime donné.

Alternativement, les deux turbomoteurs 1 et 2 peuvent être identiques et les puissances maximales PMD et PMC de ces turbomoteurs sont alors également identiques.

Chaque turbomoteur 1,2 est couplé à des moyens d'entraînement E1 et E2 et à des dispositifs d'assistance d'urgence, U1 et U2.

Chaque moyen d'entraînement E1, E2 en rotation du générateur de gaz respectif 11, 21, est ici constitué par un démarreur alimenté respectivement par un dispositif démarreur/générateur équipant l'autre turbomoteur. Et chaque dispositif d'assistance d'urgence U1, U2 comporte avantageusement, dans cet exemple, des bougies à incandescence « glow-plug » comme dispositif d'allumage à effet quasi-instantané, en complément des bougies conventionnelles, et une cartouche de propergol alimentant une micro-turbine annexe comme moyen mécanique d'accélération des générateurs de gaz. Ce dispositif d'allumage complémentaire peut également être utilisé en sortie normale de changement de régime de vol, ou en sortie d'urgence du régime de sur-ralenti.

En fonctionnement, ces moyens d'entraînement E1, E2, les dispositifs d'assistance d'urgence U1, U2 et les commandes des turbomoteurs 1 et 2 sont gérés par des moyens d'activation d'un système de régulation 4, sous le contrôle du dispositif de commande numérique général de la motorisation connue sous l'acronyme FADEC 5 (initiales de « Full Authority Digital Engine Control » en terminologie anglaise).

Un exemple de gestion opérée par le système de régulation 4, dans le cadre d'un profil de mission tel que présenté ci-dessus et enregistré dans une mémoire 6 parmi d'autres, est illustré en figure 3. Le système 4 sélectionne parmi un ensemble de modes de gestion M0 les modes de gestion adaptés au profil de la mission sélectionnée dans la mémoire 6, ici quatre modes de gestion pour la mission retenue (de profil illustré par la figure 1): un mode M1 concernant les phases transitoires, un mode M2 se rapportant aux vols en régime continu - croisière et phase de recherche - , un mode M3 relatif aux pannes de moteur et un mode M4 de gestion des redémarrages d'urgence des moteurs en régime de sur-ralenti.

Cette mission comporte comme phases transitoires les phases A, D et F, respectivement de décollage, de vol stationnaire et d'atterrissage. Ces phases sont gérées par le mode M1 de fonctionnement conventionnel en bimoteur dans lequel les turbomoteurs 1 et 2 sont tous deux en fonctionnement (étape 100), de sorte que l'hélicoptère dispose d'une puissance élevée, pouvant aller jusqu'à leur PMD. Les deux moteurs fonctionnent au même niveau de puissance relatif par rapport à leur puissance nominale. Les cas de panne d'un des moteurs sont gérés de manière conventionnelle, par exemple en armant les régimes OEI du « petit » turbomoteur 2 de plus faible puissance dans le cas de la panne de l'autre turbomoteur.

Le vol continu correspond, dans la mission de référence, aux phases de vol de croisière, B et E, et à la phase C de recherche à basse altitude. Ces phases sont gérées par le mode M2 qui prévoit le fonctionnement d'un turbomoteur alors que l'autre turbomoteur est en régime de sur-ralenti et maintenu en rotation en chambre éteinte par des moyens d'entraînement, à une vitesse d'allumage située dans sa fenêtre préférentielle.

Ainsi, dans les phases de croisière B et E, le turbomoteur 1 fonctionne et l'autre turbomoteur 2 est maintenu en rotation par son démarreur utilisé comme moyen d'entraînement E2 et alimenté par le démarreur/générateur du turbomoteur 1. La rotation est réglée sur une vitesse d'allumage de chambre préférentielle (étape 200). Cette configuration correspond au besoin en puissance qui, dans ces phases de croisière, est inférieur à la PMC du « gros » moteur 1 et supérieur à celle du « petit » moteur 2. Parallèlement, au regard de la consommation Cs, cette solution est également avantageuse car le gros moteur 1 fonctionne à un niveau de puissance relative plus élevé qu'en mode conventionnel, avec les deux moteurs en fonctionnement. Lorsque les moteurs sont identiques, le besoin de puissance dans ces phases de croisière ne peut excéder la PMC des moteurs.

Dans la phase de recherche C, le « petit » turbomoteur 2 de plus faible puissance fonctionne seul car il est capable de fournir à lui seul le besoin de puissance. En effet, le besoin est alors sensiblement inférieur à la puissance PMC du turbomoteur surdimensionné 1 mais aussi inférieur à la PMC du « petit » moteur 2. Mais surtout, la consommation Cs est plus faible car ce « petit » moteur 2 fonctionne à un niveau de puissance relative plus élevé que celui auquel aurait fonctionné le turbomoteur 2. Dans cette phase C, le turbomoteur 1 est maintenu en régime de sur-ralenti, par exemple en rotation par le démarreur utilisé comme moyen d'entraînement E1 à une vitesse d'allumage de chambre préférentielle (étape 201).

Alternativement, dans le cas de moteurs de même puissance, un seul des deux moteurs fonctionne, l'autre étant maintenu en régime de sur-ralenti.

Avantageusement, le mode M2 gère aussi le redémarrage conventionnel du moteur en régime de sur-ralenti lorsque l'on approche de la fin des phases B, E ou C. Si ce redémarrage conventionnel échoue, on bascule en mode M4.

Le mode M3 gère les cas de panne du moteur utilisé en réactivant l'autre moteur par son dispositif d'assistance d'urgence. Par exemple lorsque le turbomoteur surdimensionné 1, utilisé en fonctionnement seul pendant les phases de vol de croisière B ou E, tombe en panne, le « petit » moteur 2 est rapidement réactivé via son dispositif d'assistance d'urgence U2 (étape 300). De manière similaire, si le « petit » moteur 2 seul en fonctionnement pendant la phase de recherche C tombe en panne, le « gros » moteur 1 est rapidement réactivé via son dispositif d'assistance d'urgence U1 (étape 301).

Ce mode M3 gère également dans la durée ces phases de croisière ou de recherche lorsque le moteur prévu initialement au fonctionnement est tombé en panne et remplacé par l'autre moteur réactivé :
- dans le cas des phases de croisière B et E, le dispositif d'assistance d'urgence U2 est désaccouplé, les régimes OEI du « petit » moteur 2 étant armés conformément aux certifications de sécurité (étape 310) en cas de moteurs différenciés ;
- pour la phase de recherche C (étape 311), le dispositif d'assistance d'urgence U1 est désaccouplé, la PMD du moteur surdimensionné 1 étant au moins égale à la puissance du régime OEI le plus élevé du « petit » moteur 2 en cas de moteurs différenciés.

Lorsque les conditions de vol deviennent subitement difficiles, un redémarrage rapide du moteur en régime de sur-ralenti par activation de son dispositif d'assistance peut être opportun pour disposer de la puissance de deux turbomoteurs. Dans l'exemple, ce dispositif est de nature pyrotechnique et se compose d'une cartouche de propergol alimentant une micro-turbine.

Ces cas sont gérés par le mode de redémarrage d'urgence M4. Ainsi, que ce soit pendant les phases de vol de croisière B et E (étape 410) ou de recherche C (étape 411), pendant lesquelles un seul turbomoteur 1 ou 2 fonctionne, le fonctionnement de l'autre turbomoteur 2 ou 1 est déclenché par l'activation du dispositif d'assistance pyrotechnique respectif, U2 ou U1, seulement en cas d'échec des moyens classiques de redémarrage U0 (étape 400). Les conditions de vol sont alors sécurisées par le fonctionnement de l'hélicoptère en bimoteur.

La présente invention n'est pas limitée aux exemples décrits et représentés. Notamment, l'invention s'applique aussi bien avec des turbomoteurs à puissances différenciées ou égales.

De plus, d'autres régimes de sur-ralenti que les régimes déjà évoqués plus haut - à savoir un maintien en rotation du moteur que la chambre soit éteinte ou allumée, la vitesse de rotation étant avantageusement dans la fenêtre d'allumage si la chambre est éteinte, ou une vitesse de rotation nulle avec la chambre éteinte, la mise en rotation étant alors avantageusement produite par le propre démarreur du moteur alimenté par le réseau de bord - peuvent être définis : en chambre allumée avec une vitesse de rotation nulle du moteur, ou encore avec une chambre en veille d'allumage ou partiellement allumée avec une vitesse de rotation nulle ou non nulle du moteur concerné.

En outre, le système de régulation peut prévoir plus ou moins de quatre modes de gestion. Par exemple, un autre mode ou un mode supplémentaire de gestion peut être la prise en considération des conditions géographiques (montagnes, mer, désert, etc.).

Il est également possible d'ajouter d'autre modes de gestion, par exemple par phase de vol ou par structure (moteurs, moyens d'entraînement, dispositifs d'assistance d'urgence) en fonction des profils des missions.

Par ailleurs, au moins l'un des dispositifs d'assistance peut ne pas être à usage unique, afin de permettre au moins un autre redémarrage par ce dispositif au cours de la même mission.

## Revendications

1. Procédé d'optimisation de la consommation spécifique d'un hélicoptère équipé de deux turbomoteurs (1, 2) comportant chacun un générateur de gaz (11, 21) muni d'une chambre de combustion (CC), **caractérisé en ce qu'**au moins l'un des turbomoteurs (1,2) est apte à fonctionner seul en régime de vol continu (B, E, C), l'autre moteur (2, 1) étant alors en régime dit de sur-ralenti à puissance nulle apte à passer en mode d'accélération du générateur de gaz de ce moteur (2, 1) par des moyens d'entraînement (E1, E2) compatibles avec un redémarrage en sortie d'urgence, **en ce que** ce redémarrage d'urgence est réalisé, en cas d'échec d'au moins une tentative préalable de redémarrage conventionnel (U0), par une assistance mécanique d'urgence (U2, U1) au générateur de gaz (21, 11) du turbomoteur en sur-ralenti (2, 1), produite par une énergie autonome et dédiée à ce redémarrage, et **en ce qu'**en cas de panne d'un turbomoteur (1, 2) utilisé en fonctionnement seul, l'autre turbomoteur en sur-ralenti (2, 1) est redémarré par l'assistance d'urgence (U2, U1).

2. Procédé d'optimisation selon la revendication 1, dans lequel le régime de sur-ralenti est choisi parmi un régime de maintien en rotation du moteur (1, 2) avec la chambre de combustion (CC) allumée, un régime de maintien en rotation du moteur (1, 2) avec la chambre de combustion (CC) éteinte et un régime de rotation nulle du moteur (1, 2) avec la chambre de combustion (CC) éteinte.

3. Procédé d'optimisation selon la revendication précédente, dans lequel, en sortie normale de régime de sur-ralenti, la chambre étant allumée, une variation du débit de carburant selon une loi de protection contre le pompage et l'emballage thermique entraîne le générateur de gaz (11, 12) du turbomoteur (1, 2) en accélération jusqu'à un niveau de puissance bimoteur.

4. Procédé d'optimisation selon la revendication 2, dans lequel, en sortie normale de sur-ralenti, la chambre étant éteinte, des moyens d'entraînement (E1, E2) entraînent le générateur de gaz (11, 21) en rotation selon une vitesse pré-positionnée dans une fenêtre d'allumage puis, une fois la chambre (CC) allumée, et le générateur de gaz (11, 21) est accéléré jusqu'au niveau de puissance bimoteur.

5. Procédé d'optimisation selon la revendication 2, dans lequel, en sortie normale de sur-ralenti, la chambre (CC) étant éteinte, le générateur de gaz (11, 21) est entraîné par un équipement électrique propre à ce générateur, cet équipement le démarre et l'accélère jusqu'à ce que sa vitesse de rotation soit dans une fenêtre d'allumage de la chambre (CC) puis, une fois la chambre allumée, le générateur de gaz (11, 12) est accéléré par une variation du débit carburant jusqu'au niveau de puissance bimoteur.

6. Procédé d'optimisation selon la revendication 2, dans lequel, en sortie d'urgence d'un régime de sur-ralenti en chambre (CC) éteinte, le générateur de gaz (11, 21) étant à sa vitesse de rotation dans la fenêtre d'allumage de la chambre de combustion (CC), la chambre (CC) est allumée puis le générateur de gaz est accéléré par le dispositif d'assistance d'urgence.

7. Procédé d'optimisation selon l'une quelconque des revendications 4 à 6, dans lequel une mise à feu à effet quasi-instantané, complémentaire d'un allumage conventionnel à bougies, est déclenchée pour allumer la chambre de combustion (CC) en sortie d'urgence.

8. Procédé d'optimisation de la consommation spécifique d'un hélicoptère équipé de deux turbomoteurs (1, 2) selon la revendication 1, définissant des puissances PMD au décollage, dans lequel les turbomoteurs (1,2) fournissent des puissances sensiblement différentes présentant un rapport d'hétérogénéité de puissances au moins égal au rapport entre la puissance du régime OEI le plus élevé du turbomoteur de plus faible puissance (2) et la puissance PMD du turbomoteur le plus puissant (1), en ce qu'au moins l'un des turbomoteurs (1, 2) est apte à fonctionner seul en régime continu (B, E, C), l'autre moteur (2, 1) étant alors en veille à puissance nulle et chambre de combustion éteinte, tout en restant maintenu en rotation par les moyens d'entraînement (E2, E1) en vue d'un redémarrage d'urgence.

9. Procédé d'optimisation selon la revendication précédente, dans lequel les deux turbomoteurs (1, 2) fonctionnent ensemble pendant les phases transitoires de décollage, de vol stationnaire et d'atterrissage.

10. Procédé d'optimisation selon l'une quelconque des revendications 8 ou 9, dans lequel le turbomoteur de plus faible puissance (2) fonctionne seul lorsque la puissance totale demandée est inférieure ou égale à sa PMC.

11. Architecture bimoteur équipée d'un système de régulation (4) pour la mise en oeuvre du procédé selon l'une quelconque des revendications précédentes, **caractérisée en ce qu'**elle comporte deux turbomoteurs (1, 2) équipés chacun d'un générateur de gaz (11, 21) et d'une turbine libre (12, 22) définissant des puissances maximales disponibles (PMD, PMC), **en ce que** chaque générateur de gaz (11, 21) est équipé de moyens d'entraînement (E1, E2) aptes à activer le générateur de gaz (11, 21) en sortie de régime de sur-ralenti, comportant des moyens d'entraînement en rotation (AE) et des moyens d'accélération du générateur de gaz, et d'un dispositif d'assistance mécanique d'urgence (U1, U2) comportant des moyens de mise à feu à effet quasi-instantané, complémentaires des moyens conventionnels d'allumage à bougies, et des moyens mécaniques d'accélération de générateur de gaz (11, 21) par une source autonome embarquée, et **en ce que** le système de régulation (4) contrôle les moyens d'entraînement (E1, E2) et les dispositifs d'assistance d'urgence (U1, U2) des générateurs de gaz (11, 21) en fonction des conditions et des phases de vol (A à F) de l'hélicoptère selon un profil de mission préalablement enregistré dans une mémoire (6) de ce système (4).

12. Architecture bimoteur selon la revendication précédente, dans laquelle les moyens d'entraînement (E1, E2) d'un générateur de gaz (11, 21) sont choisis parmi un démarreur électrique équipant ce générateur de gaz, alimenté par un réseau de bord ou un démarreur/générateur équipant l'autre générateur de gaz (21, 11), un générateur électrique, entraîné par une boîte de transmission de puissance (3) ou directement par la turbine libre (22, 12) de l'autre turbomoteur (2, 1), et un dispositif d'entraînement mécanique couplé à cette BTP (3) ou à cette turbine libre (12, 22).

13. Architecture bimoteur selon l'une des revendication 11 ou 12 **caractérisée en ce que** les moyens d'entraînement (E1, E2) sont aptes à maintenir le générateur de gaz (11, 21) en rotation, chambre de combustion éteinte.

## Patentansprüche

1. Optimierungsverfahren des spezifischen Verbrauchs eines Helikopters, der mit zwei Turbomotoren (1, 2) ausgestattet ist, die jeder einen mit einer Verbrennungskammer (CC) versehenen Gaserzeuger (11, 21) aufweisen, **dadurch gekennzeichnet, dass** mindestens einer der Turbomotoren (1, 2) dazu imstande ist, einzeln in einem kontinuierlichen Flugbetrieb (B, E, C) zu arbeiten, wobei der der andere Motor (2, 1) dann in einem Überverlangsamungsbetrieb bei Null-Motorkraft dazu imstande ist, in einen Beschleunigungsmodus des Gaserzeugers dieses Motors (2, 1) mittels Antriebsmitteln (E1, E2) zu wechseln, die mit einem Not-Wiederanlaufausgang kompatibel sind, dass der Not-Wiederanlauf, im Versagensfall von zumindest einem vorhergehenden konventionellen Wiederanlaufversuch (U0), realisiert wird durch eine mechanische Not-Assistenz (U2, U1) zu dem Gaserzeuger (21, 11) des Turbomotors in Überverlangsamung (2, 1), erzeugt durch eine autonome Energie und dediziert für diesen Wiederanlauf, und dass im Defektfall von einem Turbomotor (1, 2), der im Einzelbetrieb verwendet wird, der andere überverlangsamte Turbomotor (2, 1) mittels der Not-Assistenz (U2, U1) wiederangelaufen lassen wird.

2. Optimierungsverfahren nach Anspruch 1, bei welchem der Überverlangsamungsbetrieb aus einem Rotations-Aufrechterhaltungsbetrieb des Motors (1, 2) mit brennender Verbrennungskammer (CC), einem Rotations-Aufrechterhaltungsbetrieb des Motors (1, 2) mit erloschener Verbrennungskammer (CC) und einem Null-Rotationsbetrieb des Motors (1, 2) mit erloschener Verbrennungskammer (CC) ausgewählt wird.

3. Optimierungsverfahren nach dem vorhergehenden Anspruch, bei welchem bei normalem Ausgang des Überverlangsamungsbetriebs, wobei die Kammer brennt, eine Variation des Treibstoffmengenflusses gemäß einem Schutzgebot gegen das Pumpen und das thermische Durchgehen den Gaserzeuger (11, 12) des Turbomotors (1, 2) in Beschleunigung bis zu einem zweimotorigen Motorkraftpegel antreibt.

4. Optimierungsverfahren nach Anspruch 2, bei welchem bei normalem Ausgang der Überverlangsamung, wobei die Kammer erloschen ist, Antriebsmittel (E1, E2) den Gaserzeuger (11, 21) in Rotation gemäß einer voreingestellten Geschwindigkeit in einem Zündfenster antreiben, dann, sobald die Kammer (CC) gezündet ist, der Gaserzeuger (11, 21) bis zu einem zweimotorigen Motorkraftpegel angetrieben wird.

5. Optimierungsverfahren nach Anspruch 2, bei welchem bei normalem Ausgang der Überverlangsamung, wobei die Kammer (CC) erloschen ist, der Gaserzeuger (11, 21) von einer elektrischen Ausrüstung eigens für diesen Erzeuger angetrieben wird, diese Ausrüstung ihn startet und ihn beschleunigt, bis seine Rotationsgeschwindigkeit innerhalb eines Zündfensters der Kammer (CC) ist, dann, sobald die Kammer gezündet ist, der Gaserzeuger (11, 12) durch eine Variation des Treibstoffmengenflusses bis zu einem zweimotorigen Motorkraftpegel beschleunigt.

6. Optimierungsverfahren nach Anspruch 2, bei welchem im Not-Überverlangsamungsbetriebsausgang bei erloschener Kammer (CC) der Gaserzeuger (11, 21) bei seiner Rotationsgeschwindigkeit innerhalb des Zündfensters der Verbrennungskammer (CC) ist, die Kammer (CC) gezündet wird, dann der Gaserzeuger durch die Not-Assistenzeinrichtung beschleunigt wird.

7. Optimierungsverfahren nach einem der Ansprüche 4 bis 6, bei welchem eine Befeuerung mit quasi-sofortiger Wirkung, komplementär zu einer konventionellen Zündung mit Zündkerze, ausgelöst wird, um die Verbrennungskammer (CC) beim Notausgang zu zünden.

8. Optimierungsverfahren für den spezifischen Verbrauch eines Helikopters, der mit zwei Turbomotoren (1, 2) ausgestattet ist, nach Anspruch 1, das MTOP-Motorkräfte beim Abheben definiert, bei welchem die Turbomotoren (1, 2) im Wesentlichen verschiedene Motorkräfte liefern, die ein Heterogenitätsverhältnis von Motorkräften zeigen, die zumindest gleich dem Verhältnis zwischen der höchsten Motorkraft des OEI-Betriebs des Turbomotors der schwächsten Motorkraft (2) und der MTOP-Motorkraft des leistungsstärksten Turbomotors (1) ist, dass zumindest einer der Turbomotoren (1, 2) dazu imstande ist, einzeln in einem kontinuierlichen Betrieb (B, E, C) zu arbeiten, wobei der der andere Motor (2, 1) dann in Bereitschaft bei Null-Motorkraft und gelöschter Verbrennungskammer ist, während er mittels Antriebsmitteln (E2, E1) im Hinblick auf einen Not-Wiederanlauf in Rotation gehalten wird.

9. Optimierungsverfahren nach dem vorhergehenden Anspruch, bei welchem die beiden Turbomotoren (1, 2) gemeinsam während der Übergangsphasen des Abhebens, des stationären Flugs und der Landung arbeiten.

10. Optimierungsverfahren nach einem der Ansprüche 8 oder 9, bei welchem der Turbomotor mit einer schwächsten Motorkraft (2) einzeln arbeitet, wenn die benötigte Gesamt-Motorkraft niedriger oder gleich seiner MCP ist.

11. Zweimotor-Architektur, ausgestattet mit einem Steuerungssystem (4) zur Durchführung des Verfahrens nach einem der vorhergehenden Ansprüche, **dadurch gekennzeichnet, dass** sie zwei Turbomotoren (1, 2) aufweist, die jeder mit einem Gaserzeuger (11, 21) und einer Freiwellenturbine (12, 22) ausgestattet sind, die maximale verfügbare Motorkräfte (MTOP, MCP) definieren, dass jeder Gaserzeuger (11, 21) ausgestattet ist mit Antriebsmitteln (E1, E2), die dazu imstande sind, den Gaserzeuger (11, 21) an einem Not-Überverlangsamungsbetriebsausgang zu aktivieren, die Rotations-Antriebsmittel (AE) und Beschleunigungsmittel des Gaserzeugers aufweisen, und mit einer mechanischen Not-Assistenzeinrichtung (U1, U2), die Mittel zum Befeuern mit quasi-sofortiger Wirkung aufweist, komplementär zu konventionellen Zündmitteln mit Zündkerze, und mit mechanischen Gaserzeuger-Beschleunigungsmitteln (11, 21) durch eine bordseitige autonome Quelle, und dass das Steuerungssystem (4) die Antriebsmittel (E1, E2) und die Not-Assistenzeinrichtungen (U1, U2) der Gaserzeuger (11, 21) in Funktion der Flugbedingungen und der Flugphasen (A bis F) des Helikopters gemäß einem Missionsprofil steuert, das in einem Speicher (6) dieses Systems (4) vorab gespeichert ist.

12. Zweimotor-Architektur nach dem vorhergehenden Anspruch, bei welcher die Antriebsmittel (E1, E2) eines Gaserzeugers (11, 21) ausgewählt sind aus einem elektrischen Starter, mit dem dieser Gaserzeuger ausgerüstet ist, versorgt von einem Bordnetz oder einem Starter/Generator, mit dem der andere Gaserzeuger (21, 11) ausgerüstet ist, einem elektrischen Generator, der von einer Motorkraft-Getriebebox (3) oder direkt mittels der Freiwellenturbine (22, 12) des anderen Turbomotors (2, 1) angetrieben wird, und einer mechanischen Antriebseinrichtung, die mit diesem MGB (3) oder dieser Freiwellenturbine (12, 22) gekoppelt ist.

13. Zweimotor-Architektur nach einem der Ansprüche 11 oder 12, **dadurch gekennzeichnet, dass** die Antriebsmittel (E1, E2) dazu imstande sind, den Gaserzeuger (11, 21) in Rotation zu halten, bei brennender Verbrennungskammer.

## Claims

1. A method for optimizing the specific fuel consumption of a helicopter equipped with two turbo-engines (1, 2) each comprising a gas generator (11, 21) provided with a combustion chamber (CC), **characterized in that** at least one of the turbo-engines (1, 2) is adapted to operate alone at a continuous flight speed (B, E, C), the other engine (2, 1) being then at a so-called over-idling nil power speed adapted to switch into an acceleration mode of the gas generator of such engine (2, 1) through driving means (E1, E2) being compatible with an emergency restart output, **in that** such emergency restart is carried out, in case of a failure of at least a prior conventional restart try (U0), through an emergency mechanical assistance (U2, U1) to the gas generator (21, 11) of the standby turbo-engine (2, 1), produced by an autonomous power dedicated to such restart, and **in that**, in case of a failure in a turbo-engine (1, 2) being operated alone, the other over-idling turbo-engine (2, 1) is restarted by the emergency assistance (U2, U1).

2. The optimization method according to claim 1, wherein the over-idling speed is selected between a rotation keeping speed of the engine (1, 2) with the combustion chamber (CC) being ON, a rotation keeping speed of the engine (1, 2) with the combustion chamber (CC) being OFF and a nil rotation speed of the engine (1, 2) with the combustion chamber (CC) being OFF.

3. The optimization method according to the preceding claim, wherein, in a "normal" output of the over-idle speed, the chamber being ON, a variation of the fuel flow rate according to a protection law against pumping and thermal runaway drives the gas generator (11, 12) of the turbo-engine (1, 2) into an acceleration up to the twin-engine power level.

4. The optimization method according to claim 2, wherein, in a "normal" output of the over-idle speed, the chamber being OFF, an active drive (E1, E2) leads the gas generator (11, 21) to rotate according to a pre-positioned speed within an ignition window, and then, once the chamber (CC) being ON, the gas generator (11, 21) is accelerated up to the twin-engine power level.

5. The optimization method according to claim 2, wherein, in a "normal" output of the over-idle speed, the chamber (CC) being OFF, the gas generator (11, 21) is driven by an electrical equipment adapted for such generator, such equipment starts it and accelerates it until its rotation speed is within an ignition window of the chamber (CC), then, once the chamber is ON, the gas generator (11, 12) is accelerated by a variation of the fuel flow rate up to the twin-engine power level.

6. The optimization method according to claim 2, wherein, in an emergency output of an over-idling speed with the chamber (CC) being OFF, the gas generator (11, 21) being at the rotation speed thereof within the ignition window of the combustion chamber (CC), the chamber (CC) is ignited, then the gas generator is accelerated by the emergency assistance device.

7. The optimization method according to any of claims 4 to 6, wherein a firing with a quasi instantaneous effect, complementary to a plug conventional ignition, is triggered to ignite the combustion chamber (CC) in an emergency output.

8. The method for optimizing the specific fuel consumption of a helicopter equipped with two turbo-engines (1, 2) according to claim 1, defining MTOP powers on take-off, wherein the turbo-engines (1, 2) provide substantially different powers presenting a heterogeneity ratio of powers being at least equal to the ratio between the highest OEI speed power of the turbo-engine of lower power and the MTOP power of the most powerful turbo-engine, one of the turbo-engines (1, 2) is able to operate alone in a continuous speed (B, E, C), the other engine (2, 1) being then in a standby mode with a nil power and the combustion chamber being OFF, while being kept in rotation by the driving (E2, E1) in view of an emergency restart.

9. The optimization method according to the preceding claim, wherein both turbo-engines (1, 2) operate together during the transitory phases of take-off, stationary flight and landing.

10. The optimization method according to any of claims 8 or 9, wherein the turbo-engine of the lowest power (2) operates alone when the total power being required is lower than or equal to its MCP.

11. A twin-engine architecture equipped with a control system (4) for the implementation of the method according to any of preceding claims, **characterized in that** it comprises two turbo-engines (1, 2) each equipped with a gas generator (11, 21) and a free turbine (12, 22) defining available maximum powers (MTOP, MCP), **in that** each gas generator (11, 21) is provided with means (E1, E2) adapted for activating the gas generator (11, 21) in an over-idling speed output, comprising rotation driving means (AE) and acceleration means of the gas generator, and an emergency mechanical assistance device (U1, U2) comprising firing means with a quasi instantaneous effect, complementary to conventional plug igniting means, and acceleration mechanical means for a gas generator (11, 21) operated by an on-board autonomous source, and **in that** the control system (4) monitors the driving means (E1, E2) and the emergency assistance devices (U1, U2) of the gas generators (11, 21) depending on the conditions and the flight phases (from A to F) of the helicopter according to a mission profile previously registered in a memory of this system (4).

12. The twin-engine architecture according to the preceding claim, wherein the active driving means (E1, E2) of a gas generator (11, 21) are selected between an electrical starter equipping such gas generator, supplied by an on-board mains or a starter/generator equipping the other gas generator (21, 11), an electrical generator driven by a power transfer box (3), or directly by the free turbine (22, 12) of the other turbo-engine (2, 1), and a mechanical driving device coupled with such PTB (3) or such free turbine (12, 22).

13. The twin-engine architecture according to any of claims 11 or 12, **characterized in that** the active driving means (E12, E2) are able to keep the gas generator (11, 21) within the combustion chamber.
